(19) **Europäisches Patentamt**
**European Patent Office**
**Office européen des brevets**

(11) **EP 1 339 288 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(51) Int Cl.:
*A01N 65/00* *(2006.01)* *A01N 51/00* *(2006.01)*
*A01N 47/40* *(2006.01)*

(21) Anmeldenummer: **01998148.9**

(22) Anmeldetag: **19.11.2001**

(86) Internationale Anmeldenummer:
**PCT/EP2001/013340**

(87) Internationale Veröffentlichungsnummer:
**WO 2002/043496 (06.06.2002 Gazette 2002/23)**

(54) **WIRKSTOFFKOMBINATIONEN**

ACTIVE AGENT COMBINATIONS

COMBINAISONS DE PRINCIPES ACTIFS

(84) Benannte Vertragsstaaten:
**AT BE CH CY DE DK ES FI FR GB GR IE IT LI LU MC NL PT SE TR**

(30) Priorität: **01.12.2000 DE 10059606**

(43) Veröffentlichungstag der Anmeldung:
**03.09.2003 Patentblatt 2003/36**

(73) Patentinhaber: **Bayer CropScience AG**
**40789 Monheim (DE)**

(72) Erfinder:
• **BARON, Gerhard**
**51377 Leverkusen (DE)**
• **KILIAN, Michael**
**51379 Leverkusen (DE)**
• **ROSENFELDT, Frank**
**40764 Langenfeld (DE)**

(56) Entgegenhaltungen:
**DE-A1- 4 426 942**

## Beschreibung

Die vorliegende Erfindung betrifft neue Wirkstoffkombinationen, die aus bekannten Extrakten aus Samen des Neem-Baumes einerseits und weiteren bekannten pestiziden Wirkstoffen andererseits bestehen, und sehr gute insektizide und akarizide Eigenschaften besitzen.

Es ist bereits bekannt, daß Extrakte aus den Samen des Neem-Baumes insektizide Eigenschaften besitzen (vgl. "Römpp Chemie Lexikon", 9. Auflage, Seite 2954, Georg Thieme Verlag, Stuttgart-New York, 1991). Die Wirksamkeit dieser Substanz ist gut, lässt aber bei niedrigen Aufwandmengen in manchen Fällen zu wünschen übrig.

Weiterhin ist schon bekannt, dass zahlreiche Pyrethroide, Carbamate, PhosphorsäureDerivate und Heterocyclen zur Bekämpfung von tierischen Schädlingen, wie Insekten und unerwünschten Akariden, eingesetzt werden können (vgl. WO 93-10 083; DE-A 2 717 040; Farm Chemicals Handbook 1998, C 328; EP-A 0 161 019 und EP-A 0 049 977). Auch die Wirkung dieser Stoffe ist aber bei niedrigen Aufwandmengen nicht immer befriedigend.

DE 44 26 942 A1 betrifft insektizide Mittel auf der Basis von Chlornicotinyl-Insekten und Synergisten für Insektizide. Explizit werden in der DE-Schrift die Chlornicotinyl-Insektizide Imidacloprid, Thiacloprid und Acetamiprid erwähnt.

Der in Kombination mit dem Chlornicotinyl-Insektiziden verwendete Synergist kann aus einer umfangreichen Gruppe ausgewählt werden.

Hierzu zählen beispielsweise:

a) Methylendioxiphenyl-Verbindungen,
b) Propargylderivate,
c) Alkylphosphonsäureester,
d) Phosphorsäureester,
e) Azolderivate,
f) Pinonester,
g) Formamide,
h) $C_{12-21}$-Carbonsäureester und -amide,
i) Diarylamine,
j) Cyclische Imine sowie
k) Neemöl.

Für jede dieser einzelnen Gruppen sind in der DE-Schrift nochmals eine Vielzahl an Vertreter genannt. Damit muss der Synergist, welcher in Kombination mit dem Chlornicotinyl-Insektizid verwendet wird, aus einer umfangreichen Liste an Obergruppen sowie jeweils einer großen Gruppe an Beispielen für jede dieser Gruppen ausgewählt werden.

Es wurde nun gefunden, dass die neuen Wirkstoffkombinationen, bestehend aus

A) Extrakten aus Samen des Neem-Baumes,
und
(B) einem Wirkstoff aus der Gruppe der Nicotinyle oder Neonicotinyle, bestehend aus

(15) Imidacloprid,
(16) Thiacloprid,
(17) Thiamethoxam,
(18) Acetamiprid und
(19) Clothianidin,

sehr gute insektizide und akarizide Eigenschaften besitzen.

Überraschenderweise ist die insektizide und akarizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Unter Extrakten aus Samen des Neem-Baumes sind im vorliegenden Fall alle üblichen aus den Samen des Neem-Baumes durch Extraktion oder Auspressen isolierbaren Produkte zu verstehen, die wesentliche Mengen an Azadirachtin enthalten. Zu diesen Produkten gehört auch Azadirachtin selbst.

Die verschiedenen Extrakte aus Samen des Neem-Baumes und auch Azadirachtin selbst sind bereits bekannt (vgl. "The Pesticide Manual" 11th. Edition, British Crop Protection Council 1997, Nr. 36 sowie "Römpp Chemie Lexikon", 9. Auflage, Seite 2954, Georg Thieme Verlag, Stuttgart-NewYork, 1991).

Die in den erfindungsgemäßen Wirkstoffkombinationen neben den Extrakten aus den Samen des Neem-Baumes enthaltenen, insektizid und akarizid wirksamen Komponenten sind ebenfalls bekannt. Im einzelnen werden in "The

Pesticide Manual" 11th Edition, British Crop Protection Council, 1997, die folgenden Stoffe beschrieben, und zwar

(1) Imidacloprid unter Nr. 418,

(2) Acetamiprid unter Nr.  5,

Die übrigen oben genannten Wirkstoffe werden in den folgenden Publikationen beschrieben:

(3) Thiacloprid EP-A-0 235 725

(4) Thiamethoxam EP-A 0 580 533 und

(5) Clothianidin EP-A 0 376 279,

Die erfindungsgemäßen Wirkstoffkombinationen enthalten neben dem Extrakt aus den Samen des Neem-Baumes mindestens einen der Wirkstoffe aus der Gruppe (B). Sie können darüber hinaus auch weitere insektizid und/ oder akarizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Extrakt aus Samen des Neem-Baumes

0,2 bis 50 Gewichtsteile, vorzugsweise 0,3 bis 40 Gewichtsteile an Wirkstoff aus der Gruppe (B).

Die erfindungsgemäßen Wirkstoffkombinationen eignen sich zur Bekämpfung von tierischen Schädlingen, vorzugsweise Arthropoden und Nematoden, insbesondere Insekten und Spinnentieren, die in der Landwirtschaft, im Gartenbereich, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Blattaria z.B. Blatta orientalis, Periplaneta americana, Leucophaea maderae, Blattella germanica.

Aus der Ordnung der Orthoptera z.B. Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp..

Aus der Ordnung der Anoplura z.B. Phylloxera vastatrix, Pemphigus spp., Pediculus humanus corporis, Haematopinus spp., Linognathus spp..

Aus der Ordnung der Mallophaga z.B. Trichodectes spp., Damalinea spp.

Aus der Ordnung der Thysanoptera z.B. Frankliniella occidentalis, Hercinothrips femoralis, Thrips palmi, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Liriomyza spp., Stomoxys spp., Oestrus spp.; Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Aus der Ordnung der Acarina z.B. Acarus siro, Argas spp., Omithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Die erfindungsgemäßen Wirkstoffkombinationen lassen sich mit besonders gutem Erfolg zur Bekämpfung von pflanzenschädigenden Insekten und Akariden einsetzen, wie beispielsweise gegen Tetranychus spp., Panonychu spp., Hemitarsonemus spp., Tarsonemus spp., Brevipalpus spp., Phylocoptruta spp., Aculus spp., Bryobia spp. und Eriophyes spp.

Die gute Pflanzenverträglichkeit der Wirkstoffkombinationen in den zur Bekämpfung von Insekten und Akariden notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen werden üblicherweise in Form von Mitteln (Formulierungen) eingesetzt, zu deren Herstellung

- die Extrakte aus Samen des Neem-Baumes in handelsüblicher Zubereitung oder in Form von isolierten Substanzen und

- die Wirkstoffe aus der Gruppe [B] entweder als solche oder in handelsüblichen Zubereitungen

verwendet werden können.

Dabei können die erfindungsgemäßen Wirkstoffkombinationen in die üblichen Mittel (Formulierungen) überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln, Pflanzenwachstumsregulatoren, Chelaten oder Superabsorbern.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver, Granulate und Formkörper, angewendet werden. Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen, Inkrustieren, Implantieren, Injizieren oder durch Schaumapplikation.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 10 und 3000 g/ha, vorzugsweise zwischen 20 und 2000 g/ha.

Bei der Behandlung des Bodens liegen die Aufwandmengen an Wirkstoffkombination im allgemeinen zwischen 10 und 4000 g/ha, vorzugsweise zwischen 20 und 2000 g/ha.

Bei der Behandlung von Samen liegen die Aufwandmengen im allgemeinen zwischen 0,01 und 50 g/Kilogramm Saatgut, vorzugsweise zwischen 0,05 und 40 g/Kilogramm Saatgut.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22) wie folgt berechnet werden:

Wenn

X     den Wirkungsgrad beim Einsatz des Wirkstoffes A in einer Aufwandmenge von $m$ g/ha bedeutet,

Y     den Wirkungsgrad beim Einsatz des Wirkstoffes B in einer Aufwandmenge von $n$ g/ha bedeutet und

E     den Wirkungsgrad beim Einsatz der Wirkstoffe A und B in Aufwandmengen von $m$ und $n$ g/ha bedeutet,

dann ist

$$E = X + Y - \frac{X \cdot Y}{100} \cdot$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, daß kein Befall beobachtet wird.

Ist die tatsächliche Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Die Erfindung wird durch die folgenden Beispiele veranschaulicht

**Beispiel 1**

**Trialeurodes-Test**

Zur Herstellung einer zweckmäßigen Wirkstoffzubereitung vermischt man eine handelsübliche Formulierung von Wirkstoff oder Wirkstoffkombination mit Wasser bis zum Erreichen der gewünschten Konzentration.

Wandelröschen (Lantana camara), die stark von allen Stadien der Weißen Fliege (Trialeurodes vaporariorum) befallen sind, werden im Abstand von 7 Tagen jeweils mit einer Wirkstoffzubereitung in der gewünschten Aufwandmenge bespritzt.

15 Tage nach der zweiten Behandlung erfolgt die Auswertung. Dabei bedeutet 100 %, dass alle Fliegen abgetötet wurden, während 0 % bedeutet, dass keine Fliegen abgetötet wurden.

Wirkstoffe, Aufwandmengen und Versuchsergebnisse gehen aus der folgenden Tabelle hervor.

## Tabelle 1

## Trialeurodes-Test

| Wirkstoff | Aufwandmenge an Wirkstoff in g/ha | Abtötungsgrad in % | |
|---|---|---|---|
| Bekannt: | | | |
| Neem-Extrakt*) | 30 | 28,6 | |
| (16) Thiacloprid | 100 | 72,8 | |
| Erfindungsgemäß | | gef. | ber.**) |
| Neem-Extrakt*) + (16) Thiacloprid | 30 + 100 | 91,9 | 80,6 |

*)     Es wurde Neem-Baum-Samenextrakt eingesetzt, der unter der Bezeichnung Neem-Azal® (Firma Terfolio) im Handel ist.

**)    gef. = gefundene Wirkung

ber. = nach der Colby-Formel berechnete Wirkung

**Beispiel 2**

**Trialeurodes-Test**

Zur Herstellung einer zweckmäßigen Wirkstoffzubereitung vermischt man eine handelsübliche Formulierung von Wirkstoff oder Wirkstoffkombination mit Wasser bis zum Erreichen der gewünschten Konzentration.

Wandelröschen (Lantana camara), die stark von der Weißen Fliege (Trialeurodes vaporariorum) befallen sind, werden im Abstand von 7 Tagen jeweils mit einer Wirkstoffzubereitung in der gewünschten Aufwandmenge bespritzt.

15, 19 bzw. 25 Tage nach der zweiten Behandlung erfolgt die Auswertung. Dabei bedeutet 100 %, dass alle Fliegen abgetötet wurden, während 0 % bedeutet, dass keine Fliegen abgetötet wurden.

Wirkstoffe, Aufwandmengen und Versuchsergebnisse gehen aus der folgenden Tabelle hervor.

## Tabelle 2

### Trialeurodes-Test

| Wirkstoff | Aufwand-menge an Wirkstoff in g/ha | Abtötungs-grad in % 15 Tage nach der zweiten Behandlung | Abtötungs-grad in % 19 Tage nach der zweiten Behandlung | Abtötungs-grad in % 25 Tage nach der zweiten Behandlung |
|---|---|---|---|---|
| Bekannt: | | | | |
| Neem-Extrakt*) | 30 | 28,6 | 0 | 0 |
| (16) Thiacloprid | 100 | 72,8 | 39,5 | 0 |
| Erfindungsgemäß Neem-Extrakt*) + (16) Thiacloprid | 30 + 100 | gef. 91,9  ber.**) 80,6 | gef. 82,7  ber.**) 39,5 | gef. 70,0  ber.**) 0 |

*) Es wurde Neem-Baum-Samenextrakt eingesetzt, der unter der Bezeichnung Neem-Azal® (Firma Trifolio) im Handel ist.

**) gef. = gefundene Wirkung

ber. = nach der Colby-Formel berechnete Wirkung

**Patentansprüche**

1. Insektizide und akarizide Mittel, **gekennzeichnet durch** einen Gehalt an einer Wirkstoffkombination bestehend aus

A) Extrakten aus Samen des Neem-Baumes
und
(B) einem Wirkstoff aus der Gruppe der Nicotinyle oder Neonicotinyle, bestehend aus

(15) Imidacloprid,
(16) Thiacloprid,
(17) Thiamethoxam,
(18) Acetamiprid und
(19) Clothianidin,

sowie Streckmitteln und/oder oberflächenaktiven Stoffen.

**2.** Mittel gemäß Anspruch 1, **dadurch gekennzeichnet, dass** in den WirkstoffKombinationen das Gewichtsverhältnis von Extrakt aus Samen des Neem-Baumes zu

- Wirkstoff der Gruppe (B) zwischen 1: 0,2 und 1: 50 liegt,

**3.** Verfahren zur Bekämpfung von Insekten und Akariden, **dadurch** gekenzeichnet, daß man Wirkstoffkombinationen gemäß Anspruch 1 auf die Schädlinge und/oder deren Lebensraum ausbringt.

**4.** Verwendung von Wirkstoffkombinationen gemäß Anspruch 1 zur Bekämpfung von Insekten und Akariden.

**5.** Verfahren zur Herstellung von insektiziden und akariziden Mitteln, **dadurch gekennzeichnet, daß** man Wirkstoffkombinationen gemäß Anspruch 1 mit Streckmitteln und/oder oberflächenaktiven Stoffen vermischt.

**Claims**

**1.** Insecticidal and acaricidal compositions, **characterized in that** they comprise an active compound combination comprising

A) extracts from seeds of the neem tree
and
an active compound from the group of the nicotinyls or neonicotinyls consisting of

(15) imidacloprid,
(16) thiacloprid,
(17) thiamethoxam,
(18) acetamiprid and
(19) clothianidin,

and extenders and/or surfactants.

**2.** Compositions according to Claim 1, **characterized in that** in the active compound combinations the weight ratio of extract from seeds of the neem tree to

- active compound of group (B) is between 1:0.2 and 1:50.

**3.** Method for controlling insects and acarids, **characterized in that** active compound combinations according to Claim 1 are applied to the pests and/or their habitat.

**4.** Use of active compound combinations according to Claim 1 for controlling insects and acarids.

**5.** Process for preparing insecticidal and acaricidal compositions, **characterized in that** active compound combinations according to Claim 1 are mixed with extenders and/or surfactants.

**Revendications**

**1.** Agent insecticide et acaricide, **caractérisé par** une teneur en une combinaison de substances actives constituée de

A) extraits de la semence de nim
et
(B) d'une substance active du groupe des nicotinoïdes ou néonicotinoïdes, composé de

(15) l'imidaclopride,
(16) le thiaclopride,
(17) le thiaméthoxam,
(18) l'acétamipride et
(19) la clothianidine,

ainsi que des produits de coupage et/ou des agents actifs en surface.

2. Agent selon la revendication 1, **caractérisé en ce que** le rapport pondéral dans les combinaisons de substances actives de l'extrait de semence de nim sur la substance active du groupe (B) se situe entre 1:0,2 et 1:50.

3. Procédé de lutte contre les insectes et les acariens, **caractérisé en ce qu'**on applique les combinaisons de substances actives suivant la revendication 1 sur les parasites et/ou leur biotope.

4. Utilisation de combinaisons de substances actives suivant la revendication 1 pour la lutte contre les insectes et les acariens.

5. Procédé de fabrication de produits insecticides et acaricides, **caractérisé en ce qu'**on mélange des combinaisons de substances actives suivant la revendication 1 avec des produits de coupage et/ou des agents actifs en surface.